# EUROPEAN PATENT SPECIFICATION

(11) **EP 2 958 347 B1**
(45) Date of publication and mention of the grant of the patent: **15.11.2017**
(21) Application number: 14172704.0
(22) Date of filing: 17.06.2014
(51) Int. Cl.: H04W 4/02, H04W 48/02, H04W 4/22, H04W 4/00, H04W 4/04

(54) **SCHEDULING METHOD AND SCHEDULING CONTROLLER FOR WIRELESS-CONNECTED APPARATUS**
SCHEDULING-VERFAHREN UND -STEUERUNG FÜR EIN DRAHTLOS VERBUNDENES GERÄT
PROCÉDÉ DE PLANIFICATION ET CONTRÔLEUR DE PLANIFICATION POUR APPAREILS CONNECTÉS SANS-FIL

(43) Date of publication of application: 23.12.2015
(73) Proprietor: FUJITSU LIMITED, Kawasaki-shi, Kanagawa 211-8588 (JP)
(72) Inventor: Fang, Yiwei, High Wycombe, Buckinghamshire HP11 1GD (GB); Vadgama, Sunil Keshavji, Ashford, Middlesex TW15 3RD (GB)
(74) Representative: Fenlon, Christine Lesley

(56) References cited:
- WO-A1-00/69202
- WO-A2-2013/181310
- US-A1- 2011 195 699
- US-A1- 2012 052 804
- US-A1- 2012 244 860

## Description

The present invention relates to a scheduling method and scheduling controller for wirelessly-connected apparatus.

Human exposure to electromagnetic fields is not a new phenomenon, however from the 20th century environmental exposure to man-made electromagnetic fields (EMF) has steadily increased as growing electricity demand, ever-advancing technologies and changes in social behaviour have created more and more artificial sources. Everyone is exposed to a complex mix of weak electric and magnetic fields, both at home and at work, from the generation and transmission of electricity, domestic appliances and industrial equipment, to telecommunications and broadcasting.

It is not disputed that electromagnetic fields above certain levels can trigger biological effects. Experiments with healthy volunteers indicate that short-term exposure at the levels present in the environment or in the home do not cause any apparent detrimental effects. Exposures to higher levels that might be harmful are restricted by national and international guidelines. The current debate is centred on whether long-term low level exposure can evoke biological responses and influence people's wellbeing.

The long-term effect of mobile (cellular) telephone use on human health is another topic of much current research. No obvious adverse effect of exposure to low level radio frequency (RF) fields has been discovered. However, given public concerns regarding the safety of cellular telephones, further research aims to determine whether any less obvious effects might occur at very low exposure levels.

In addition to mobile telephones, apparatuses using wireless communication include, but are not limited to, M2M devices. M2M is the networking of intelligent, communications enabled, remote assets. M2M devices gather and exchange information automatically without human interaction and connect the physical world to back-end IT infrastructure. M2M-connected assets can be fixed or mobile and include cars and truck fleets, utility meters, copiers and printers, kiosks and wireless displays, ventilation and air-conditioning sensors, home medical devices, fitness monitors, and CCTV cameras.

M2M-connected devices can report on a huge range of conditions including temperature, location, consumption, heart rate, stress levels, light, acceleration, altitude, and speed. Using all this data, it is possible to obtain immediate feedback on how a particular remote asset is being used, which product features are most popular with customers, and what problems (such as errors or breakdowns) typically arise. This information is useful for improving business processes, which can help to provide a competitive edge.

An M2M solution includes intelligent sensors and microprocessors that are embedded in a remote asset, and a communications module that receives and transmits data to central management systems where it can be analysed and acted on. Often an M2M-connected endpoint will send and receive its data over wireless networks. Current networks are, for example, GSM, GPRS, EDGE, 3G, LTE, or Wi-Fi and WiMAX, however other wireless networks may be used, now or in future.

EMF exposure from M2M communication could be particularly acute, as a significant proportion of M2M devices are to be deployed in close proximity to humans, for their designed purpose of assisting people's daily life, activity and productivity. In particular, M2M devices will unavoidably become an essential part of smart buildings. At the most fundamental level, smart buildings will deliver useful building services that make occupants productive (e.g. illumination, thermal comfort, air quality, physical security, sanitation, and many more) at the lowest cost and environmental impact over the building lifecycle. Achieving this vision requires adding intelligence from the beginning of the design phase through to the end of the building's useful life. Smart buildings use information technology during operation to connect a variety of subsystems, which typically operate independently, so that these systems can share information to optimize total building performance. Smart buildings look beyond the building equipment within their four walls. They are connected and responsive to the smart power grid, and they interact with building operators and occupants to empower them with new levels of visibility and actionable information.

The forecast is that by the year 2020 there will be 50 billion M2M devices connected globally. Based on the potential effect of EMF on the health of humans, and the public concerns towards EMF exposure, it is becoming increasingly important to try to reduce the EMF footprint of wirelessly-connected devices.

US2012/0052804A1 discloses a method in which the function of an electronic device, having sensors for detecting the presence of a human nearby, is adjusted according to whether or not a human is present, in order to reduce the EMF exposure of the human.

For the purpose of improving road safety, each of US2011/0195699A1, WO2013/181310A2 and WO00/69202 disclose a method of disabling certain actions on mobile devices when is use within vehicles, for example to prevent the driver using the mobile device whilst driving unless it is to call an emergency number. US2012/0244860 discloses a similar method, but relates to inhibiting the use of mobile devices within a controlled area.

Due to the significant portion of a day a human typically stays inside a building, and the enormous number of M2M devices likely to be installed around these buildings, it is particularly desirable to reduce and avoid human exposure to the EMF resulting from M2M devices, as well as other wirelessly-transmitting devices, particularly while humans are inside an EMF intensive smart building.

More generally, it is desirable to reduce the exposure to EMF of a human in a particular location which results from wireless transmission by apparatus at that location.

According to a first aspect of the present invention there is provided a scheduling method for controlling wireless transmission of an electrical data signal by an apparatus deployed within a predefined area, comprising controlling transmission of the data signal according to a preset policy such that, while a human belonging to a specific predetermined category is present within the predefined area, transmission of the data signal is suspended unless transmission of the data signal is, or becomes, urgent, said suspension being based on the determination of a tracking system that is adapted to determine the presence and location of humans and to determine who said humans are, wherein the specific predetermined category is one of a plurality of predetermined categories consisting of (i) a category for people with certain health conditions, (ii) a category for people who are potentially more vulnerable (e.g. young or old people), (iii) a category for people with a recent history of high EMF exposure, and (iv) a category for people with a daily EMF exposure level aggregated from multiple location

By controlling wireless transmission by an apparatus according to a scheduling method embodying the present invention, human exposure to EMF emitted by the apparatus can be reduced, since transmission is suspended while a particular human is within the predefined area unless the transmission is, or becomes, of an urgent nature.

According to a second aspect of the present invention there is provided a scheduling controller for controlling wireless transmission of an electrical data signal by an apparatus deployed within a predefined area, which controller is configured to control transmission of the data signal according to a preset policy such that, while a human belonging to a specific predetermined category is present within the predefined area, transmission of the data signal is suspended unless it is urgent, said suspension being based on the determination of a tracking system that is adapted to determine the presence and location of humans and to determine who said humans are, wherein the specific predetermined category is one of a plurality of predetermined categories consisting of (i) a category for people with certain health conditions, (ii) a category for people who are potentially more vulnerable, (iii) a category for people with a recent history of high EMF exposure, and (iv) a category for people with a daily EMF exposure level aggregated from multiple locations.

A method embodying the present invention may further comprise controlling, according to the or a different preset policy, the transmission of an electrical data signal from at least one additional apparatus, also deployed within the predefined area, such that, while a human belonging to the or a different predetermined category is present within the predefined area, transmission of the data signal from the additional apparatus is also suspended unless it is urgent.

A controller embodying the present invention may be further configured to control, according to the or a different preset policy, the transmission of an electrical data signal from at least one additional apparatus, also deployed within the predefined area, such that, while a human belonging to the or a different predetermined category is present within the predefined area, transmission of the data signal from the additional apparatus is also suspended unless it is, or becomes, urgent.

Transmission of data signals is controlled according to a preset policy which, amongst other things, may specify a preset time period for which transmission of a signal is to be suspended. The policy may take account, for example, of one or more of: the type of data to be transmitted, the proximity of the apparatus to humans, the location of the apparatus (e.g. inside or outside a building, type and/or size of building), the typical occupancy of a building at different times of day and/or different times of the year, and the difference in susceptibility to EMF exposure of different humans. Each apparatus within the predefined area may be controlled according to the same preset policy or one or more of the apparatuses may be controlled according to a preset policy which is different from that of another apparatus.

When the apparatus, and/or any additional apparatus, are configured to transmit at least two different types of electrical data signal, each type of electrical data signal may be ranked according to priority. Transmission of a data signal by the or each apparatus may be controlled in dependence upon the ranking of the data signal. For example, some data may not be classified as urgent, in the sense that the data must be sent whether or not a human is present, but are nevertheless time-sensitive, or some data may be considered to be more important than other data.

The predefined area may be a building, or a part of a building (such as a particular room, section or floor), or a monitored zone around the or each apparatus.

Although the apparatus, and/or the at least one additional apparatus, may desirably comprise a machine-to-machine (M2M) device, the invention may be applied to any other device which wirelessly transmits data and is located in an environment where humans may be present.

According to an embodiment of a third aspect of the present invention there is provided a system comprising at least one apparatus, configured to wirelessly transmit electrical data signals within a predefined area in which the apparatus is deployed, and a scheduling controller for controlling wireless transmission of the electrical data signals by the apparatus, wherein the scheduling controller is a scheduling controller embodying the second aspect of the present invention.

Reference will now be made, by way of example, to the accompanying drawings, in which:
Figure 1 is a diagram illustrating a system embodying the present invention including multiple M2M devices which can be controlled by a scheduling controller according to the second aspect of the present invention; and
Figure 2 is a flowchart illustrating a scheduling method embodying the first aspect of the present invention.

A scheduling controller comprising a scheduling policy engine embodying the present invention will now be described with reference to an embodiment which aims to minimize human exposure to EMF emission from M2M operation in smart buildings. The scheduling method is designed to actively reduce radio transmission of the M2M devices in a smart building, upon detection of a human in a close proximity to these devices. After detection of a human leaving a monitored zone, the scheduling controller then informs the devices to resume their transmission, clearing data in the buffer. A location-based scheduling policy can be made for various parts of the building. The scheduling policy can also be made to prioritize the EMF reduction for certain people, subject to a number of criteria, such as their health condition, past EMF exposure, or their EMF dosage information aggregated from multiple smart buildings.

It is expected that smart buildings will have the capability of being aware of human occupancy inside the building, such as whether there are people inside the building, or how many are located in which parts of the building. Furthermore, M2M traffic does not always have the urgency of real time transmission, but instead can have a relatively large delay tolerance, with the exception of emergency and disaster monitoring and reporting. These two factors combined, i.e. the knowledge of the location of people within a smart building, and the flexibility of scheduling M2M traffic, provide an opportunity for scheduling M2M radio transmissions according to the human occupancy and location information within a smart building.

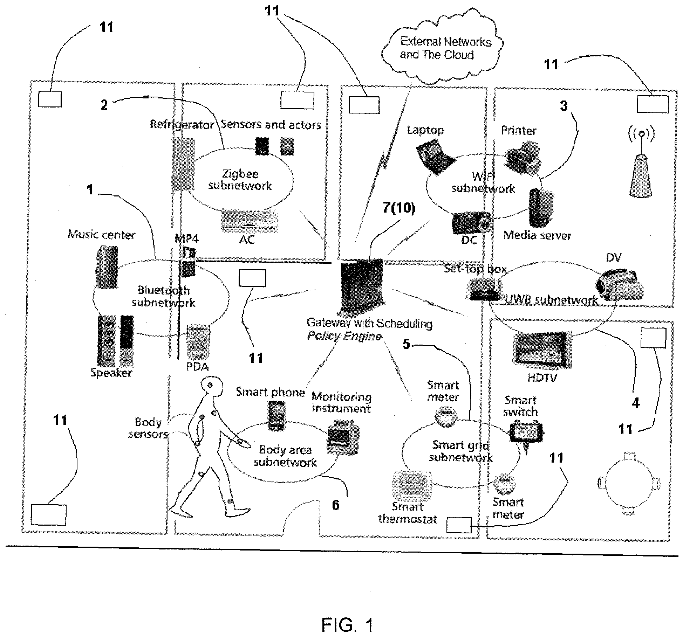

Figure 1 illustrates an architecture of M2M systems in a smart building with a scheduling controller 10 embodying the present invention. As shown in Figure 1, there are a large number of various wireless devices installed in a smart environment, which include: in-home entertainment systems 1 using Bluetooth™, such as a wireless music centre, speakers and PDA; utility electrical equipment 2 such as a refrigerator and air conditioning system equipped with sensors and a ZigBee™ wireless communication module; WiFi sub-networks 3 such as a laptop, printer, digital camera and wireless media server; a UWB sub-network 4 such as the TV and TV set-top box; a smart grid sub-network 5 such as a smart meter, smart thermostat and smart switch; and devices in a body area network 6, which include health monitoring instruments and personal communication devices such as smart phones.

In this embodiment the proposed scheduling controller 10 (scheduling policy engine) is located within a gateway device 7, which serves as a central controlling point and is connected to the aforementioned devices 1 to 6, either via wired connections or wireless routes. If connected wirelessly, the expected wireless activity for information exchange is low, as only limited information regarding the scheduling decisions is transmitted via this link. The added EMF impact due to the operation of the scheduling policy engine is therefore expected to be negligible.

The scheduling controller 10 is configured to control transmission of electrical data signals by the devices 1 to 6. Transmission is controlled according to policies preset for each of the devices 1 to 6 such that, while a human belonging to a specific predetermined category is present within the predefined area, transmission of the data signal is suspended unless it is, or becomes, urgent.

Determination of the presence and location of humans within a smart building is achieved via a tracking system 11, for example employing one or more of: infrared (IR) systems; radio frequency (RF) based systems; and ultrasound based systems. The following is a brief analysis of the advantage and disadvantage of each of these systems.

### A. Infrared (IR) Systems

The advantage of using an IR system to track the location of humans is its wide availability across much hardware such as mobile phones, TV, some printers and tablets, and also for its simplicity in hardware design, low cost installation and maintenance. The disdvantage of IR is its requirement for line-of-sight wireless transmission. Several commercially developed systems are based on IR, which include for example Firefly™ (see Firefly Motion Tracking System User's guide, http://www.gesturecentral.com/firefly/Firefly UserGuide.pdf), and OPTOTRAK™ (see Northen Digital Inc., Optotrak, http://www.ndigital.com/).

### B. Radio Frequency (RF) Based Systems

RF systems have longer range compared to IR systems, as well as having better capability to penetrate large in-building obstacles such as people and walls. An RF system is also better suited to identify unique people or objects in the system, with triangulation and fingerprint based techniques. A number of radio access technologies can be adopted for RF based tracking, such as UMTS, LTE, WLAN, RFID (Radio Frequency Identification), Bluetooth™, ZigBee™, UWB (Ultra Wide Band), etc.

### C. Ultrasound Based Systems

Ultrasound systems benefit from low cost, but suffer from lower locating precision. Active Bat (see The Bat Ultrasonic Location System, Cambridge University Computer Laboratory, http://ww w.cl.cam.ac.uk/research/dtg/attarchive/bat/) and Cricket (see N. Priyantha, A. Chakraborty, and H. Balakrishnan, "The cricket location-support system", ACM MobiCom, 2000) are examples of indoor location tracking systems using ultrasound.

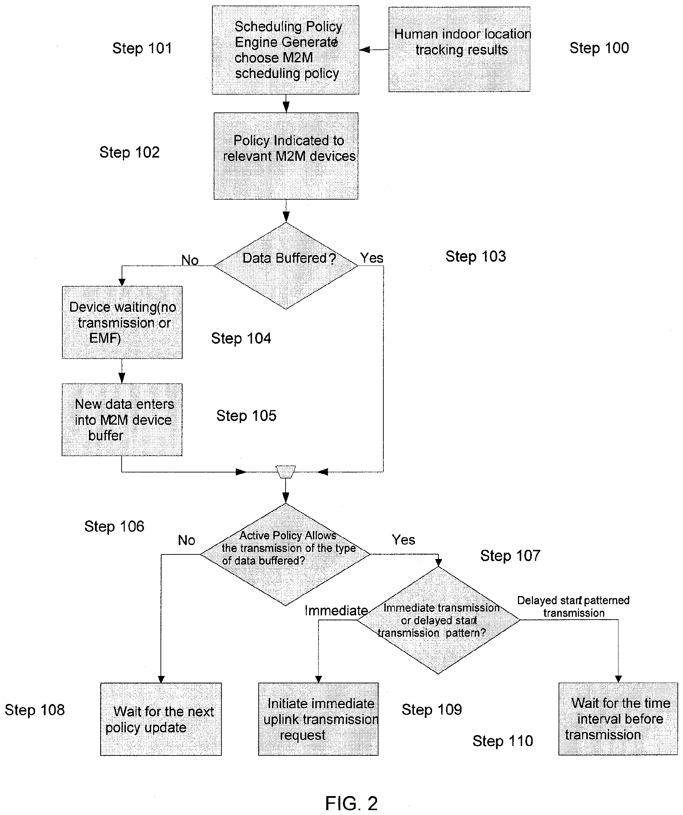

An embodiment of a scheduling method embodying the present invention, which can be carried out by the scheduling controller 10, will now be described with reference to the flowchart of Figure 2. In Step 100 the human location tracking system 11 sends human in-building distribution information regarding the location of people and their distance to the EMF-emitting M2M devices 1 to 6 to the scheduling controller 10. Upon receiving such human in-building distribution information, and taking into account the building's historical occupancy information, in Step 101 the scheduling controller 10 establishes an EMF emission policy for each part of the building, such as individual rooms (alternatively, or in addition, policies could be tailored to each device individually). The policy established by the scheduling controller 10 commonly includes which type of transmission is allowed in an area. For example, in a room full of people who are having a meeting, only time critical information in addition to emergency requests might be allowed during the meeting, and transmission of the remainder of the monitoring data generated by the devices 1 to 6 might be suppressed until a later time. Then, once the meeting has finished and people have left the room, transmission of buffered non-urgent data can be resumed. For clarity, in the above discussion data has been considered to be either delay critical or non-delay critical, but in practice more priority levels regarding the traffic will also be possible and permissible. Table 1 describes an example of a policy having such multiple priority levels, as well as the corresponding action lists towards these priorities.

**Table 1**

| **Data Type** | **The Policy - Action List** |
|---|---|
| 1) - most urgent and non-delay tolerant data | Transmit regardless of nearby human(s) |
| 2) - can wait but transmit within a specific time, high information integrity requirement | Set up a short observation period, and transmit as long as human is not in direct proximity. If the observation period expires, transmitted regardless of human distance to the devices |
| 3) - can wait for a long period, low information integrity requirement | Long observation period, only start transmission if no human is near. If the observation period expires, only a specific amount of this type of buffered data is allowed for transmission. |
| 4) - only needs to be transmitted whenever the network is free, highly delay tolerant | Only transmit when no human is close to the devices or inside the buildings (such as evenings for an office) |

In Step 102 the established policies are transmitted to the devices, with limited expected wireless resources consumption. In Step 103, upon receiving a new/updated policy, each M2M device 1 to 6 checks if any buffered data is waiting to be transmitted. If no, the device 1 to 6 simply waits (Step 104) until a data transmission request arrives (Step 105). If yes, in Step 106 the device 1 to 6 then checks the data type against the current policy. If the current policy allows the buffered data to be transmitted, in Step 107 the device considers whether the current policy allows immediate transmission of that data type or whether transmission is to be delayed. If immediate transmission is allowed, in Step 109 uplink access is initiated by the device 1 to 6. Otherwise, in Step 110, transmission is delayed by a certain time interval, or a certain transmission pattern can be implemented such as "allowed for 1 kB per 10 minutes until further instruction". If in Step 106 it is determined that the buffered data type is still banned from transmission by the policy, then in Step 108 the data is kept in the buffer to wait for the next policy update.

Various scenarios in which embodiments of the invention can be implemented will now be described. In general, unless otherwise indicated, the scenarios described below relate to scheduling M2M transmission in a smart building environment. In the aforesaid smart building, there are typically a large number of M2M devices installed around the building to provide the building users with various services or assistance. These commonly wirelessly connected M2M devices are responsible for a considerable amount of indoor EMF emission, which is a potential threat to human wellbeing.

In a first scenario, a scheduling controller embodying the present invention receives information from a human location tracking system using various human location tracking sensors and, upon detection of the presence of one or humans in close proximity to an M2M device, the controller causes the M2M device to reduce its level of RF transmission, in order to reduce its EMF impact on the human body. When it is detected that humans have moved away from the M2M device, the controller causes the device to resume transmission and clear any previously- buffered data which has accumulated in the low activity period.

A second scenario is like the first scenario, except that in addition the human location tracking system is capable of identifying individual humans, so the controller can acquire information not only on the location of humans but also on who the humans are. This allows the controller to prioritise EMF reduction for one or more particular groups of people, such as those with special requirements, disabilities or chronic health problems.

A third scenario is like the second scenario, except that in addition, when the tracking system identifies individual building users, the EMF exposure of one or more of the individuals in a pre-defined previous period, such as the previous day or the previous week, in the same smart building is also sent to the scheduling controller, in order to allow the prioritising of certain individuals for EMF reduction, such as for those that have already been exposed to more than a certain amount of EMF in the previous period.

A fourth scenario is like the third scenario, except that in addition an individual's EMF exposure record in a smart building is uploaded to a cloud server, and EMF exposure information of that person from other smart buildings that the person has recently been inside has also been uploaded to the cloud server. This allows the individual's EMF exposure information across a number of smart buildings, which has been accumulated in the cloud, to be distributed to the scheduling controllers of those buildings, which allows the scheduling controllers to make scheduling decisions accordingly.

As described above, a scheduling method and scheduling controller are proposed in order to actively reduce human exposure to EMF emitted from wirelessly transmitting devices, especially but not exclusively M2M devices installed in smart buildings. Embodiments of the invention can utilize information regarding the location of humans inside a smart building or other space to reduce or stop RF transmission of data when people, for example especially those more vulnerable individuals, are in close proximity to EMF sources. Use of the present invention could assist in alleviating public fear of the prospect of EMF exposure when there is large scale M2M deployment in the near future, provide protection to humans from the impact of EMF, and promote human health in an intelligent society.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

## Claims

1. A scheduling method for controlling wireless transmission of an electrical data signal by an apparatus (1 to 6) deployed within a predefined area, comprising controlling transmission of the data signal according to a preset policy such that, while a human belonging to a specific predetermined category is present within the predefined area, transmission of the data signal is suspended unless it is, or becomes, urgent, said suspension being based on the determination of a tracking system that is adapted to determine the presence and location of humans and to determine who said humans are;
wherein the specific predetermined category is one of a plurality of predetermined categories consisting of (i) a category for people with certain health conditions, (ii) a category for people who are potentially more vulnerable, (iii) a category for people with a recent history of high EMF exposure, and (iv) a category for people with a daily EMF exposure level aggregated from multiple locations.

2. A method as claimed in claim 1, further comprising controlling, according to the or a different preset policy, the transmission of an electrical data signal from at least one additional apparatus, also deployed within the predefined area, such that, while a human belonging to the predetermined category, or a different predetermined category of the said plurality, is present within the predefined area, transmission of the data signal from the additional apparatus is also suspended unless it is urgent.

3. A method as claimed in claim 1 or 2, when the apparatus, and/or the at least one additional apparatus, is/are configured to transmit at least two different types of electrical data signal, wherein each type of electrical data signal is ranked according to priority, and transmission of a data signal by the or each apparatus is controlled in dependence upon the ranking of the data signal.

4. A method as claimed in any preceding claim, wherein the predefined area is a building, or a part of a building, or a monitored zone around the or each apparatus.

5. A method as claimed in any preceding claim, wherein the apparatus, and/or the at least one additional apparatus, comprises a machine-to-machine, M2M, device.

6. A method as claimed in any preceding claim, wherein the transmission of the data signal from the apparatus is suspended for a preset period.

7. A method as claimed in claim 6, wherein the preset period is determined in accordance with the extent to which the type of data to be transmitted is tolerant of delay in transmission.

8. A scheduling controller (10) for controlling wireless transmission of an electrical data signal by an apparatus (1 to 6) deployed within a predefined area, which controller is configured to control transmission of the data signal according to a preset policy such that, while a human belonging to a specific predetermined category is present within the predefined area, transmission of the data signal is suspended unless it is urgent, said suspension being based on the determination of a tracking system that is adapted to determine the presence and location of humans and to determine who said humans are; wherein the specific predetermined category is one of a plurality of predetermined categories consisting of (i) a category for people with certain health conditions, (ii) a category for people who are potentially more vulnerable, (iii) a category for people with a recent history of high EMF exposure, and (iv) a category for people with a daily EMF exposure level aggregated from multiple locations.

9. A controller as claimed in claim 8, further configured to control, according to the or a different preset policy, the transmission of an electrical data signal from at least one additional apparatus, also deployed within the predefined area, such that, while a human belonging to the predetermined category, or a different predetermined category of the plurality, is present within the predefined area, transmission of the data signal from the additional apparatus is also suspended unless it is, or becomes, urgent.

10. A controller as claimed in claim 8 or 9, operable, when the apparatus, and/or the at least one additional apparatus, is/are configured to transmit at least two different types of electrical data signal, and each type of electrical data signal is ranked according to priority, to control transmission of a data signal by the or each apparatus in dependence upon the ranking of the data signal.

11. A controller as claimed in any one of claims 8 to 10, wherein the predefined area is a building, or a part of a building, or a monitored zone around the or each apparatus.

12. A controller as claimed in any one of claims 8 to 11, wherein the apparatus, and/or the at least one additional apparatus, comprises a machine-to-machine, M2M, device.

13. A controller as claimed in any one of claims 8 to 12, operable such that the transmission of the data signal from the apparatus is suspended for a preset period.

14. A system comprising at least one apparatus, configured to wirelessly transmit electrical data signals within a predefined area in which the apparatus is deployed, and a scheduling controller for controlling wireless transmission of the electrical data signals by the apparatus, wherein the scheduling controller is a scheduling controller as claimed in any one of claims 8 to 13.

## Patentansprüche

1. Zeitplanungsverfahren zum Steuern drahtloser Übertragung eines elektrischen Datensignals durch eine Einrichtung (1 bis 6), die in einem zuvor definierten Gebiet eingesetzt wird, umfassend das Steuern der Übertragung des Datensignals gemäß einer zuvor festgelegten Vorgehensweise dergestalt, dass, während sich ein Mensch, der zu einer spezifischen zuvor bestimmten Kategorie gehört, innerhalb des zuvor definierten Gebietes aufhält, die Übertragung des Datensignals unterbrochen wird, es sei denn, sie ist oder wird dringend, wobei diese Unterbrechung auf der Bestimmung eines Nachverfolgungssystems beruht, das dazu eingerichtet ist, die Anwesenheit und den Standort von Menschen zu bestimmen und zu bestimmen, wer diese Menschen sind;
wobei die spezifische zuvor bestimmte Kategorie eine einer Vielzahl von zuvor bestimmten Kategorien ist, die aus (i) einer Kategorie für Personen mit gewissen Gesundheitszuständen, (ii) einer Kategorie für Personen, die möglicherweise verletzlicher sind, (iii) einer Kategorie für Personen, die in jüngster Vergangenheit einem hohen EMF ausgesetzt waren, und (iv) einer Kategorie für Personen besteht, die einem täglichen Niveau von EMF ausgesetzt sind, das von mehreren Stellen stammt.

2. Verfahren nach Anspruch 1, das des Weiteren das Steuern, gemäß der oder einer unterschiedlichen zuvor eingestellten Vorgehensweise, der Übertragung eines elektrischen Datensignals von mindestens einer zusätzlichen Einrichtung, die ebenfalls innerhalb des zuvor definierten Gebietes eingesetzt wird, dergestalt umfasst, dass, während ein Mensch, der zu der zuvor bestimmten Kategorie oder einer unterschiedlichen zuvor bestimmten Kategorie dieser Vielzahl gehört, innerhalb des zuvor definierten Gebietes anwesend ist, die Übertragung des Datensignals von der zusätzlichen Einrichtung ebenfalls unterbrochen wird, es sei denn, sie ist dringend.

3. Verfahren nach Anspruch 1 oder 2, wobei die Einrichtung und/oder die mindestens eine zusätzliche Einrichtung dazu ausgestaltet ist, mindestens zwei unterschiedliche Arten elektrischen Datensignals zu übertragen, wobei jede Art elektrischen Datensignals prioritätsmäßig klassifiziert wird, und die Übertragung eines Datensignals durch die oder jede Einrichtung in Abhängigkeit von der Klassifizierung des Datensignals gesteuert wird.

4. Verfahren nach einem vorhergehenden Anspruch, wobei es sich bei dem zuvor definierten Gebiet um ein Gebäude oder einen Teil eines Gebäudes oder eine überwachte Zone um die oder jede Einrichtung herum handelt.

5. Verfahren nach einem vorhergehenden Anspruch, wobei die Einrichtung und/oder die mindestens eine zusätzliche Einrichtung eine Maschine-zu-Maschine, M2M, -Vorrichtung umfasst.

6. Verfahren nach einem vorhergehenden Anspruch, wobei die Übertragung des Datensignals von der Einrichtung für einen zuvor eingestellten Zeitraum unterbrochen wird.

7. Verfahren nach Anspruch 6, wobei der zuvor eingestellte Zeitraum in Übereinstimmung mit dem Umfang, in welchem die Art von Daten übermittelt werden sollen, für Übertragungsverzögerung tolerant ist.

8. Zeitplanungssteuerung (10) zum Steuern drahtloser Übertragung eines elektrischen Datensignals durch eine Einrichtung (1 bis 6), die in einem zuvor definierten Gebiet eingesetzt wird, wobei die Steuerung dazu ausgestaltet ist, die Übertragung des Datensignals gemäß einer zuvor festgelegten Vorgehensweise dergestalt zu steuern, dass, während sich ein Mensch, der zu einer spezifischen zuvor bestimmten Kategorie gehört, innerhalb des zuvor definierten Gebietes anwesend ist, die Übertragung des Datensignals unterbrochen wird, es sei denn, sie ist dringend, wobei diese Unterbrechung auf der Bestimmung eines Nachverfolgungssystems beruht, das dazu eingerichtet ist, die Anwesenheit und den Standort von Menschen zu bestimmen und zu bestimmen, wer diese Menschen sind;
wobei die spezifische zuvor bestimmte Kategorie eine einer Vielzahl von zuvor bestimmten Kategorien ist, die aus (i) einer Kategorie für Personen mit gewissen Gesundheitszuständen, (ii) einer Kategorie für Personen, die möglicherweise verletzlicher sind, (iii) einer Kategorie für Personen, die in jüngster Vergangenheit einem hohen EMF ausgesetzt waren, und (iv) einer Kategorie für Personen besteht, die einem täglichen Niveau von EMF ausgesetzt sind, das von mehreren Stellen stammt.

9. Steuerung nach Anspruch 8, die des Weiteren dazu ausgestaltet ist, gemäß der oder einer unterschiedlichen zuvor eingestellten Vorgehensweise die Übertragung eines elektrischen Datensignals von mindestens einer zusätzlichen Einrichtung, die ebenfalls innerhalb des zuvor definierten Gebietes eingesetzt wird, dergestalt zu steuern, dass, während ein Mensch, der zu der zuvor bestimmten Kategorie oder einer unterschiedlichen zuvor bestimmten Kategorie der Vielzahl gehört, innerhalb des zuvor definierten Gebietes anwesend ist, die Übertragung des Datensignals von der zusätzlichen Einrichtung ebenfalls unterbrochen wird, es sei denn, sie ist oder wird dringend.

10. Steuerung nach Anspruch 8 oder 9, die dazu betrieben wird, wenn die Einrichtung und/oder die mindestens eine zusätzliche Einrichtung dazu ausgestaltet ist/sind, mindestens zwei unterschiedliche Arten elektrischen Datensignals zu übertragen, und jede Art elektrischen Datensignals prioritätsmäßig klassifiziert wird, um die Übertragung eines Datensignals durch die oder jede Einrichtung in Abhängigkeit von der Klassifizierung des Datensignals zu steuern.

11. Steuerung nach irgendeinem der Ansprüche 8 bis 10, wobei es sich bei dem zuvor definierten Gebiet um ein Gebäude oder einen Teil eines Gebäudes oder eine überwachte Zone um die oder jede Einrichtung herum handelt.

12. Steuerung nach irgendeinem der Ansprüche 8 bis 11, wobei die Einrichtung und/oder die mindestens eine zusätzliche Einrichtung eine Maschine-zu-Maschine, M2M, -Vorrichtung umfasst.

13. Steuerung nach irgendeinem der Ansprüche 8 bis 12, die dergestalt betrieben werden kann, dass die Übertragung des Datensignals von der Einrichtung für eine zuvor eingestellte Zeitdauer unterbrochen wird.

14. System, umfassend mindestens eine Einrichtung, die dazu ausgestaltet ist, elektrische Datensignale innerhalb eines zuvor definierten Gebietes drahtlos zu übertragen, in welchem die Einrichtung eingesetzt wird, und eine Zeitplanungssteuerung zum Steuern der drahtlosen Übertragung der elektrischen Datensignale durch die Einrichtung, wobei es sich bei der Zeitplanungssteuerung um eine Zeitplanungssteuerung nach irgendeinem der Ansprüche 8 bis 13 handelt.

## Revendications

1. Procédé de planification pour commander une transmission sans fil d'un signal de données électrique par un appareil (1 à 6) déployé dans une zone prédéfinie, comprenant la commande de transmission du signal de données conformément à une stratégie préétablie de telle sorte que, alors qu'un être humain appartenant à une catégorie prédéterminée spécifique est présent dans la zone prédéfinie, la transmission du signal de données est suspendue à moins qu'elle soit ou ne devienne urgente, ladite suspension étant basée sur la détermination d'un système de poursuite qui est adapté pour déterminer la présence et l'emplacement d'êtres humains et pour déterminer qui sont lesdits êtres humains ;
dans lequel la catégorie prédéterminée spécifique est l'une d'une pluralité de catégories prédéterminées consistant en (i) une catégorie de personnes ayant certains états de santé, (ii) une catégorie de personnes qui sont potentiellement plus vulnérables, (iii) une catégorie de personnes ayant un récent historique d'exposition élevée aux EMF, et (iv) une catégorie de personnes ayant un niveau d'exposition quotidien aux EMF cumulé à partir de multiples emplacements.

2. Procédé selon la revendication 1, comprenant en outre la commande, conformément à la stratégie préétablie ou une stratégie différente, de la transmission d'un signal de données électrique à partir d'au moins un appareil supplémentaire, également déployé dans la zone prédéfinie, de sorte que, alors qu'un être humain appartenant à la catégorie prédéterminée, ou à une catégorie prédéterminée différente de ladite pluralité, est présent dans la zone prédéfinie, la transmission du signal de données depuis l'appareil supplémentaire est également suspendue à moins qu'elle ne soit urgente.

3. Procédé selon la revendication 1 ou 2, dans lequel l'appareil, et/ou le au moins un appareil supplémentaire, est/sont configurés pour transmettre au moins deux types différents de signal de données électrique, dans lequel chaque type de signal de données électrique est classé en fonction d'une priorité, et la transmission d'un signal de données par l'appareil ou chaque appareil est commandée en fonction du classement du signal de données.

4. Procédé selon l'une quelconque des revendications précédentes, dans lequel la zone prédéfinie est un bâtiment, ou une partie d'un bâtiment, ou une zone surveillée autour de l'appareil ou de chaque appareil.

5. Procédé selon l'une quelconque des revendications précédentes, dans lequel l'appareil, et/ou le au moins un appareil supplémentaire, comprennent un dispositif machine à machine, M2M.

6. Procédé selon l'une quelconque des revendications précédentes, dans lequel la transmission du signal de données depuis l'appareil est suspendue pendant une période préétablie.

7. Procédé selon la revendication 6, dans lequel la période préétablie est déterminée en fonction de la mesure selon laquelle le type de données à transmettre est tolérant vis-à-vis d'un retard de transmission.

8. Dispositif de commande de planification (10) pour commander une transmission sans fil d'un signal de données électrique par un appareil (1 à 6) déployé dans une zone prédéfinie, lequel dispositif de commande est configuré pour commander la transmission du signal de données conformément à une stratégie préétablie de telle sorte que, alors qu'un être humain appartenant à une catégorie prédéterminée spécifique est présent dans la zone prédéfinie, la transmission du signal de données est suspendue à moins qu'elle ne soit urgente, ladite suspension étant basée sur la détermination d'un système de poursuite qui est adapté pour déterminer la présence et l'emplacement d'êtres humains et pour déterminer qui sont lesdits êtres humains ;
dans lequel la catégorie prédéterminée spécifique est l'une d'une pluralité de catégories prédéterminées consistant en (i) une catégorie de personnes ayant certains états de santé, (ii) une catégorie de personnes qui sont potentiellement plus vulnérables, (iii) une catégorie de personnes ayant un récent historique d'exposition élevée aux EMF, et (iv) une catégorie de personnes ayant un niveau d'exposition quotidien aux EMF cumulé à partir de multiples emplacements.

9. Dispositif de commande selon la revendication 8, configuré en outre pour commander, conformément à la stratégie préétablie ou une stratégie différente, la transmission d'un signal de données électrique à partir d'au moins un appareil supplémentaire, également déployé dans la zone prédéfinie, de sorte que, alors qu'un être humain appartenant à la catégorie prédéterminée, ou à une catégorie prédéterminée différente de ladite pluralité, est présent dans la zone prédéfinie, la transmission du signal de données depuis l'appareil supplémentaire est également suspendue à moins qu'elle ne soit ou devienne urgente.

10. Dispositif de commande selon la revendication 8 ou 9, opérationnel, lorsque l'appareil, et/ou le au moins un appareil supplémentaire, est/sont configurés pour transmettre au moins deux types différents de signal de données électrique, et chaque type de signal de données électrique est classé en fonction d'une priorité, pour commander la transmission d'un signal de données par l'appareil ou chaque appareil en fonction du classement du signal de données.

11. Dispositif de commande selon l'une quelconque des revendications 8 à 10, dans lequel la zone prédéfinie est un bâtiment, ou une partie d'un bâtiment, ou une zone surveillée autour de l'appareil ou de chaque appareil.

12. Dispositif de commande selon l'une quelconque des revendications 8 à 11, dans lequel l'appareil, et/ou le au moins un appareil supplémentaire, comprennent un dispositif machine à machine, M2M.

13. Dispositif de commande selon l'une quelconque des revendications 8 à 12, opérationnel pour que la transmission du signal de données depuis l'appareil soit suspendue pendant une période préétablie.

14. Système comprenant au moins un appareil, configuré pour transmettre sans fil des signaux de données électriques dans une zone prédéfinie dans laquelle l'appareil est déployé, et un dispositif de commande de planification pour commander la transmission sans fil des signaux de données électriques par l'appareil, dans lequel le dispositif de commande de planification est un dispositif de commande de planification selon l'une quelconque des revendications 8 à 13.
